(19) Europäisches Patentamt / European Patent Office / Office européen des brevets

(11) **EP 1 281 054 B1**

(12) **EUROPEAN PATENT SPECIFICATION**

(45) Date of publication and mention
of the grant of the patent:
**02.01.2008 Bulletin 2008/01**

(51) Int Cl.:
**G01J 3/52** *(2006.01)*    **A45D 44/00** *(2006.01)*

(21) Application number: **01935297.0**

(22) Date of filing: **10.05.2001**

(86) International application number:
**PCT/US2001/015165**

(87) International publication number:
**WO 2001/087245 (22.11.2001 Gazette 2001/47)**

(54) **METHOD FOR ANALYZING HAIR AND PREDICTING ACHIEVABLE HAIR DYEING ENDING COLORS**

VERFAHREN ZUR HAARANALYSE UND ZUR VORHERSAGE DER ERZIELBAREN HAARFÄRBUNGEN

PROCEDE SERVANT A ANALYSER LES CHEVEUX ET A PREDIRE LA COULEUR FINALE POUVANT ETRE OBTENUE PAR COLORATION

(84) Designated Contracting States:
**AT BE CH CY DE DK ES FI FR GB GR IE IT LI LU MC NL PT SE TR**

(30) Priority: **12.05.2000 US 570292**
**27.04.2001 US 844585**

(43) Date of publication of application:
**05.02.2003 Bulletin 2003/06**

(73) Proprietor: **THE PROCTER & GAMBLE COMPANY**
**Cincinnati, Ohio 45202 (US)**

(72) Inventors:
• **MARAPANE, Suresh, Bandara**
**West Chester, OH 45069 (US)**
• **QUAN, Ke-ming**
**Staines, Middlesex TW18 1LP (GB)**
• **WALTER, David**
**Windsor, Berkshire SL4 5BP (GB)**

(74) Representative: **Kohol, Sonia et al**
**Procter & Gamble Technical Centres Limited**
**Patent Department**
**Rusham Park,**
**Whitehall Lane**
**Egham, Surrey TW20 9NW (GB)**

(56) References cited:
**EP-A- 0 290 327**    **WO-A-00/15073**
**WO-A-96/41139**    **DE-A- 19 816 631**
**US-A- 5 060 171**

## Description

### Cross-reference to Related Applications

This application is a continuation-in-part (CIP) of U.S. Serial No. 09/570,292, filed on 12 May, 2000.

### Technical Field of the Invention

The present invention relates in general to a method and system for analyzing hair, predicting achievable end colors, outputting the predicted achievable colors and recommending hair color agents based on recipient specific input.

### Background of the Invention

Countless individuals all over the world seek to improve their physical appearance through the use of hair coloring agents. As a result there is an extremely large choice of available products for consumers to choose from. Often, the individual consumer finds it difficult to determine which hair coloring agent to choose and also predict what it will look like given their current hair color.

Some hair coloring agents are sold in packaging which depicts a coloring chart usually containing three starting colors and three corresponding ending colors after dyeing. Some systems have been developed that attempt to overlay pictures of hair colors over a picture of the consumer. Other systems attempt to match products to starting colors using an indexing system. Examples of such system are described in the art: WO96/41139 describes a method and apparatus for categorising hair colour and hair colour treatments and their interrelationship. WO00/15073 discloses a device for determining method data of a method for cosmetically treating hair on a person's head. EP290327 relates to a micro processing device which provides information regarding which dye formula is to be used to achieve an appropriate end colour result U55060171 describes an image enhancement system to superimpose a second image over the first image of a person's face. DE 19816631 discloses a system whereby a person can view the effect of different hair styles on an image of their face. However, none of these systems provide a personalized color prediction based on a starting hair value (such as color) of the recipient in a manner which is not limited by a specific number of inputs, As such, consumers may not achieve an ending hair color which is reasonably close to the promised hair color. Furthermore, none of the systems are made integral in the purchasing experience by synergistically combining a hair color analyzing system with a product line of hair coloring agents.

What is needed is a method and system to analyze hair, predict achievable end colors, output the predicted achievable colors and recommend hair color agents based on recipient specific input

### Summary of the Invention

The present invention is directed to a method for analyzing hair and predicting achievable end colors as defined in claim 1.

According to the invention there is disclosed a method for identifying an achievable end hair color based upon at least one starting hair value of a recipient. This method includes the steps of inputting at least one starting hair value of a recipient and then identifying at least one achievable end hair color based upon the starting hair value.

In a preferred aspect, the invention is directed to a method for identifying a hair coloring agent based upon at least one starting hair value of a recipient. This method includes the steps of inputting at least one starting hair value of a recipient, inputting a family color selection, and outputting at least one working image depicting an achievable end hair color based upon the starting hair value and the family color selection. This method may also include one or more steps to enhance the appearance of the outputted working image to account for any differences between the characteristics of the lighting under which the starting hair value is obtained versus the lighting under which the working image is viewed.

In yet another preferred aspect, the invention is directed to a method for outputting an image for a hair color analyzing system including the steps of inputting a working image of a person; inputting an achievable end hair color; converting RGB color values of the working image to L, a, and b color values; computing averaged L, a, and b color values of the working image; computing new L, a, and b color values based on the working image L, a, and b color values, the working image averaged L, a, and b color values and the achievable end hair color; and then converting the new L, a, and b color values to RGB values.

In still yet another preferred aspect, the invention is directed to a method for providing a hair coloring product to a consumer comprising the steps of identifying achievable end hair colors for the consumer, depicting the achievable end colors to the consumer, allowing the consumer to select a desired end hair color, and recommending to the consumer a hair coloring agent to achieve said desired end hair color.

These and other features and advantages of the present invention will be apparent to those skilled in the art in view of the detailed description provided below.

## Brief Description of the Drawings

FIG. 1 is a block diagram of a color prediction method capable of utilizing the present invention;
FIG. 2 is a screen shot of a welcoming screen which may be used and is an example of block 110 within Fig 1;
FIG. 3 is a screen shot of an input screen which may be used and is an example of block 120 within Fig 1;
FIG. 4 is a screen shot of an input screen which may be used and is an example of block 130 within Fig 1;
FIG. 5 is a screen shot of an input screen which may be used and is an example of block 140 within Fig 1;
FIG. 6 is a screen shot of an input screen which may be used and is an example of block 150 within Fig 1;
FIG. 7 is a screen shot of an input screen which may be used and is an example of block 160 within Fig 1;
FIG. 8 is a screen shot of an input screen which may be used and is an example of block 170 within Fig 1;
FIG. 9 is a screen shot of an input screen which may be used and is an example of block 180 and block 190 within Fig 1;
FIG. 10 is a table of family colors and corresponding shades of colors;
FIG. 11 is an example of a hair coloring chart within the prior art;
FIG. 12 is a screen shot of an output screen which may be used and is an example of block 200 within Fig 1;
FIG. 13 is an example of a before and after data generated for a consumer using the Light Mahogany Brown shade;
FIG. 14 is a block diagram of a color rendering method capable of utilizing the present invention; and
FIG. 15 is an example of (a) working image before rendering, (b) masking image of the working image, and (c) a rendered image created using the present invention.
FIG. 16 is a block diagram of a color prediction method capable of utilizing the present invention, which includes a step for assessing hair damage.
FIG. 17 is a screen shot of an input screen which may be used and is an example of block 210 within Fig. 16.

## Detailed Description of the Invention

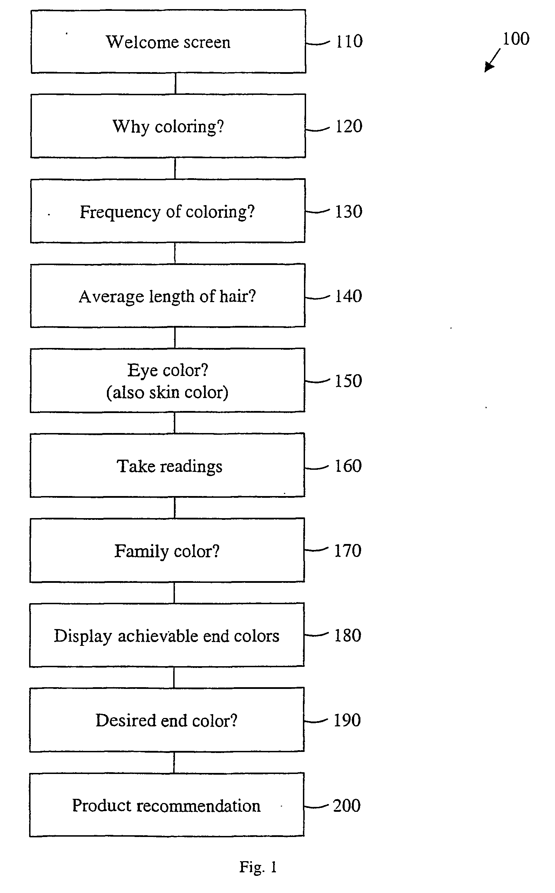

A block diagram of a method 100 for identifying a hair coloring agent based upon starting hair conditions of a recipient is illustrated in Fig. 1. In one embodiment, method 100 is embodied in a computer system and is located at a retail counter for the purpose of analyzing and recommending hair coloring products. However, persons of skilled in the art would readily appreciate that the apparatus may be used anywhere without departing from the scope of the present invention. For example, the apparatus could be used in a salon.

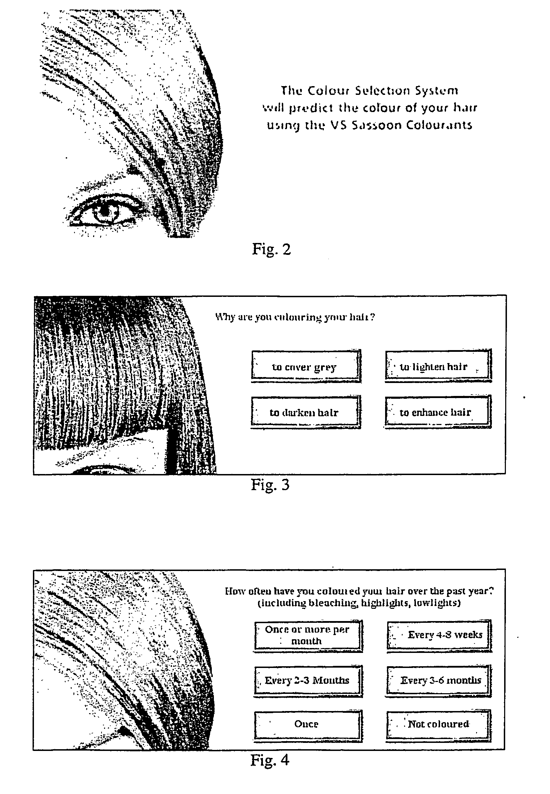

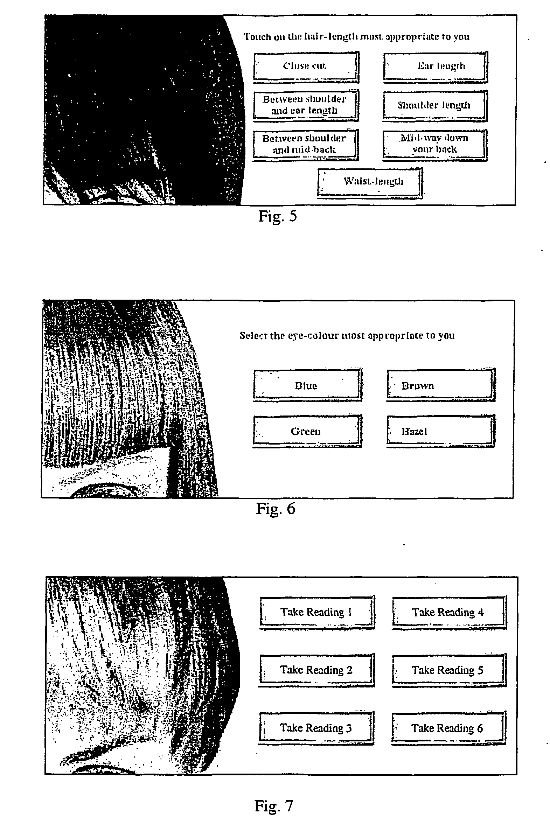

Referring to Fig. 1, hair color analyzing method 100 contains a series of steps which contain screen shots that are intended to give and receive information to a recipient or user for purposes of executing this method 100. These screen shots may be displayed on a display screen, which may include, but is not limited to: a computer screen, a cathode ray tube (CRT) device, and a liquid crystal display (LCD) device. Block 110 contains a welcoming screen (see Fig. 2) which identifies the system and the associated hair color agents (e.g. VS Sassoon products). Block 120 contains a screen which asks the recipient why he/she is coloring his/her hair (see Fig. 3). For instance, one recipient may want to cover his gray hair which requires a stronger hair coloring agent, while another recipient may only want to enhance her hair color which requires a milder hair coloring agent. Block 130 contains a screen which asks the recipient how often he/she has colored their hair over the past year (see Fig. 4). The frequency to which someone colors their hair may affect their hair's condition and ability to receive another coloring. Block 140 contains a screen which asks the recipient what is the average length of their hair (see Fig. 5). The length of a recipients hair may affect the hair's condition and ability to receive another coloring as the longer the hair, the more weathered it becomes. It may also affect how the color measurements are to be taken (e.g. skew the modeling to more heavily consider the roots versus the ends). Block 150 contains a screen which asks the recipient what is their eye (and/or skin) color. (see Fig. 6). The eye and skin color information may be depicted within the rendered images that the recipient looks at in determining their desired end color and therefore assist in the recipients selection process.

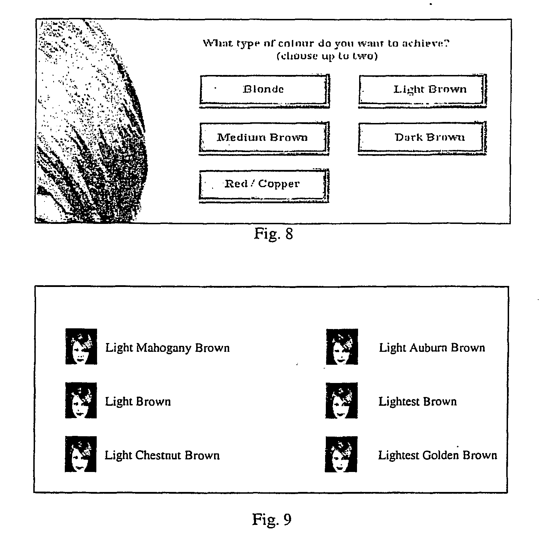

Still referring to Fig. 1, block 160 prompts the recipient to take a plurality of color measurements of their hair using a colorimeter or spectrophotometer (see Fig. 7). In one embodiment, the recipient is prompted to take six color readings (front, front left, back left, back, back right and front right). This may be performed by the recipient themselves, or it may be performed on the recipient by another, for example a beauty counselor. Each reading from the colorimeter will be in a useable format, including, but not limited to Commission International de l'Eclairage (CIE) L, a, b color values, and Hunter L, a, b color values. Persons skilled in the art would readily appreciate that other color formats may be used without departing from the scope of the present invention. Next, these L, a, b color values are averaged and stored for use later in the color prediction model. It will be apparent to those skilled in the art that a statistical analysis may be performed on the plurality of L, a, and b values, respectively, to correct for abnormalities and inaccuracies and errors which may occur during measurement. Block 170 prompts the recipient to choose from a family of colors (e.g. Blonde, Light Brown, Medium Brown, Dark Brown and Red/Copper) (see Fig. 8). The selected color family is also used in the color prediction model. While the preferred embodiment depicts five different color families, persons skilled in the art would readily appreciate that any number of color families may be used anywhere without departing from the scope of the present invention. Further, it will be appreciated by those skilled in the art that the order in which the steps set forth in blocks 120 through 170 are shown herein represent but one embodiment of the present invention, and that these steps may actually be performed in any order relative to one another.

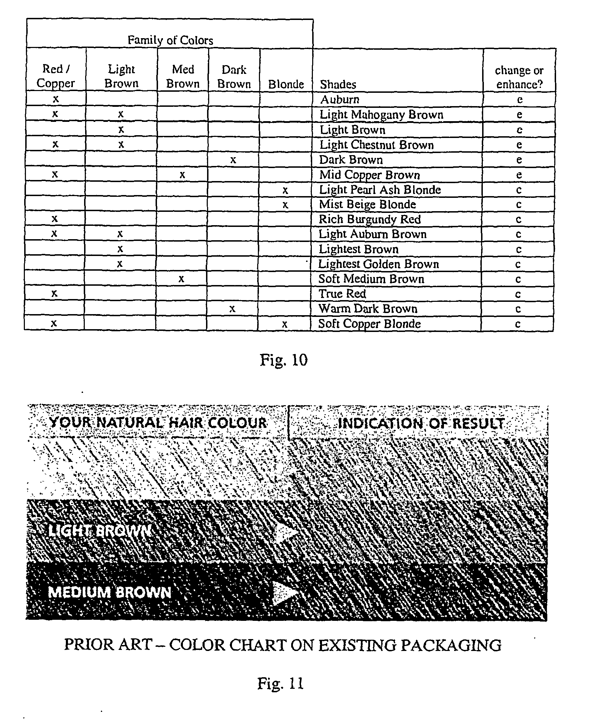

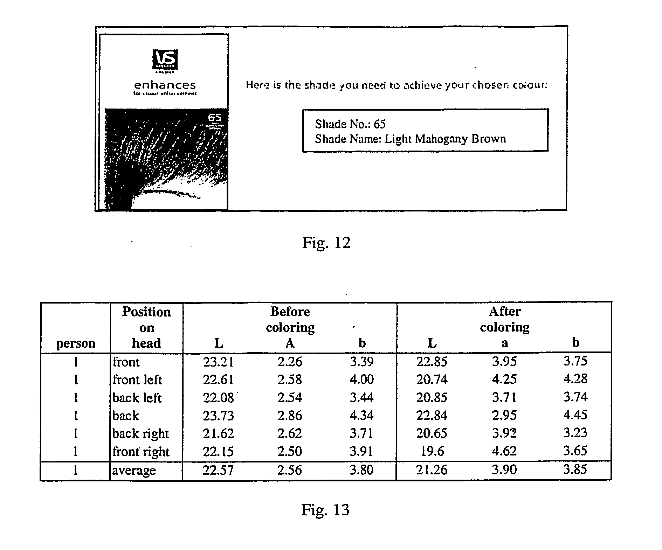

Block 180 displays achievable end hair colors which have been determined based on the input from the steps described in blocks 120 through 170 (see Fig. 9). Block 190 prompts the recipient to select from a group of achievable end hair colors which represent various color shades contained within the family color selected in the step described in block 170 (see Fig. 9). It is contemplated that prompts may be presented to the recipient which allow the recipient to go backwards in the flow of the method to arrive at a different combination of achievable end hair colors to be displayed in block 180. As non-limiting examples, this may allow the recipient to change inputted values, including answers to questions, or it may allow the recipient to simply indicate that they want to look at a lighter or darker or redder or less red or blonder or less blonder set of end hair colors. The achievable end hair colors may be separated into multiple categories, including but not limited to, changes versus enhances wherein those colors within the changes category are considered a more extreme change in color requiring a higher pH hair coloring agent and those colors in the enhance category are considered milder change in color requiring a lower pH hair coloring agent. Such information regarding the category (e.g. pH level of hair coloring agent) may assist the recipient and/or beauty counselor in making more informed decisions as to which hair coloring agent to use. While the preferred embodiment contains sixteen different color shades with the five different color families (see Fig. 10), skilled in the art would readily appreciate that any number of color shades may be used anywhere without departing from the scope of the present invention. For example, twenty-five color shades may be used. These achievable end hair colors are generated from the color prediction model and therefore more accurately represent the post-dyeing color of the recipient than the ordinary color charts frequently found on the back side of most hair coloring agent packaging (see Fig 11). Block 200 recommends a particular hair coloring agent based on the selected achievable end hair colors, also referred to as desired hair color (see Fig. 12).

Hair Damage

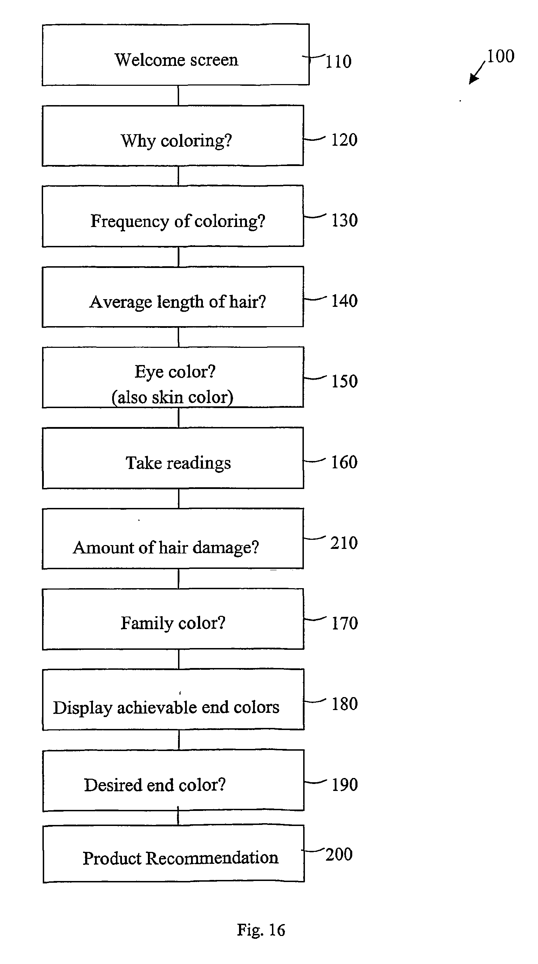

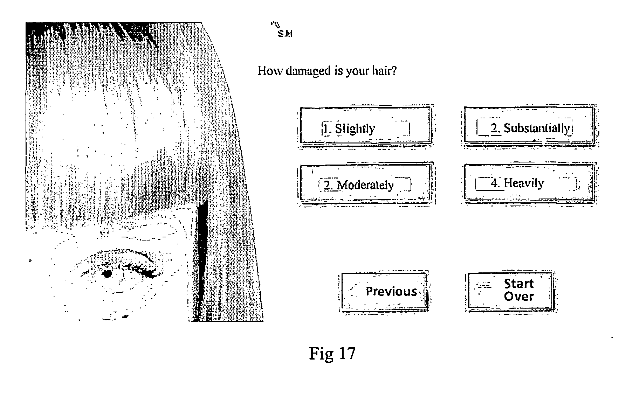

Referring to Fig. 16, hair color analyzing method 100 may further contain one or more steps in which a starting hair value of a recipient may be a measure of damage to the hair of the recipient. Block 210 contains a screen which asks the recipient the degree of damage to their hair (see Fig. 17). The amount of damage to the hair may affect the hair's ability to be colored, as typically the more damaged the hair is, the lesser its ability to hold color due to changes in the structure of the cuticle. Again, it will be appreciated by those skilled in the art that the order in which the steps set forth in blocks 120 through 170, and block 210 are shown herein represent but one embodiment of the present invention, and that these steps may actually be performed in any order relative to one another.

The degree of damage may be represented by such terms as shown in Fig. 17, i.e. "slightly, moderately, substantially, heavily," however, any words or a numbered grade scale or continuum points which depict increasing or decreasing quantities of damage may be used in the invention. The method of determining how much damage may include, but is not limited to: intuitive self-assessment by the recipient, visual or physical assessment by the recipient or another, such as a beauty counselor, assessment using a device which measures hair damage, chemical assessment of the hair, and combinations thereof. The method of determining hair damage may be conducted during the execution of method 100, or it may be conducted previously, and the result simply inputted during the execution of method 100.

Suitable hair damage measuring methods for use herein include, but are not limited to methods which employ devices that assess roughness, and by implication damage by measuring the degree of friction generated by subjecting the hair to certain conditions. For instance, ease of combing is commonly used as a measure of smoothness. In one combing test the force required to detangle, by drawing a comb through, a bundle of hair fibres is used to assess friction, roughness and damage. EP-A-965,834 describes friction-measuring equipment for evaluating the effects of cosmetics on skin, hair, membranes and eyes. This equipment assesses friction by means of deformation of a deformable assembly on a probe. JP 63/163143 measures the degree of damage to hair by comparing forward and reverse friction forces. These forces are measured by means of a torque meter. JP 62/273433 measures friction between hairs by passing a fluid in turbulent flow over a bundle of hair and measuring friction by detecting pressure loss in the fluid.

Also suitable for use herein is a device which utilizes a method for measuring the friction generated by a bundle of hair fibres, comprising providing a friction member, drawing the friction member through the bundle of hair, whereby a frictional noise signal is generated, and capturing the frictional noise signal by a noise sensor. Further, the captured noise signal may be converted to a form which can be displayed. The converted signal may then displayed using display means. In such a method, the friction generated by a bundle of the recipient's hair is measured using both a friction member and a noise sensor. The friction member may be drawn through the hair such that it contacts and passes over the surfaces of the individual hairs. This creates friction between the friction member and the hairs. The frictional noise generated depends upon the level of friction between the friction member and the hair surfaces. The friction member may be drawn through the hair of the recipient one or more times, and a statistical analysis may be performed to determine an average or mean value.

Such a friction member may generally formed from rigid material, and may be in the form of a comb means having a plurality of tines. The comb means is usually drawn through the bundle of hair in the manner usual for a comb. The frictional noise signal generated is captured by means of a frictional noise sensor, for example a microphone, which is, for instance, a standard electronic microphone or a noise cancelling microphone. Once the frictional noise has been captured it can be displayed and analysed in any suitable manner. It may be visually displayed to the recipient, who then selects a grade of damage based on the display, or it may be simply inputted directly into method 100, while also being displayed to the recipient. The frictional noise sensed by the sensor may be converted to a signal which is then transferred to the visual display unit and displayed, or it may, for instance, be displayed in the form of a trace of sound amplitude versus time. These conversions may be achieved using known means.

The degree of damage assessed by this method may be reported as a value indexed against predetermined categories for which standard degrees of hair damage have been measured and tabulated, or as a value of damage relative to a standard, or as an amount of damage as measured on a scale of decibel levels which correspond to particular degrees of damage, or may be reported as an absolute value as measured, or the like.

Suitable hair damage measuring methods for use herein also include, but are not limited to methods known in the art which chemically assess the amount of broken versus unbroken disulfide bonds of cystiene in the recipient's hair.

Color Prediction Models

In developing the color prediction models, consumers were recruited to participate in a hair colorant program at a salon. On arrival at the salon, a colorimeter was used to measure the initial color of the consumer's hair. Data generated were color readings expressed in the L, a, b color space. Multiple readings were taken at different parts of the head (e.g., front, front left, back left, back, back right and front right). An overall average color reading was calculated from these individual readings. After these initial readings were taken, the consumer's hair was colored using a shade selected by the consumer. After coloring and drying, the color of the hair was taken again using the colorimeter as outlined above. Thus data were generated for before and after coloring for a variety of shades on a number of consumers. An example of the data generated is provided in Fig. 13 for a consumer using the Light Mahogany Brown shade. There are slight differences between predicted hair color and that observed after coloring due to measurement error, modeling error and the natural variability in the data. Model accuracy as indicated by root mean square error (standard deviation of prediction) is in the region of 2.5 points for L, and 1 point for both a and b. This is in the region of natural variability within a head. Research has shown that in describing the color of their own hair empirically, consumers may be as much as 10 or 12 points out in terms of L. With this in mind, the prediction accuracy of the present invention is considered more than acceptable.

Color prediction models were then generated for each shade to predict achievable hair color after coloring versus initial color of the hair. Separate models were generated to predict L, a and b for each shade (Auburn, Light Mahogany Brown, Light Brown, Golden Chestnut, Dark Brown, Mid Copper Brown, Light Pearl Ash Blonde, Mist Beige Blonde, Rich Burgundy Red, Lightest Auburn Brown, Lightest Brown, Lightest Golden Brown, Soft Medium Brown, True Red, Warm Dark Brown and Soft Copper Blonde). Models for a and b contained linear effects for L, a and b. Models were generated using partial least squares regression. While the preferred embodiment contains the modeling strategy and technique discussed above, skilled in the art would readily appreciate that other modeling strategies and techniques may be used anywhere without departing from the scope of the present invention. An example of color prediction models generated for L, a and b for the Light Mahogany Brown shade is given below:

$$\text{Predicted L} = 7.307 + (0.5948 \times \text{L before coloring})$$

$$\text{Predicted a} = 0.0104 + (0.0868 \times \text{L before coloring}) + (0.580 \times \text{a before coloring}) + (0.2085 \times \text{b before coloring})$$

$$\text{Predicted b} = -3.3911 + (0.2831 \times L \text{ before coloring}) - (0.0190 \times a \text{ before coloring}) + (0.3187 \times b \text{ before coloring})$$

Referring again to Fig. 1, Block 180 displays the achievable end colors from which the recipient will be prompted to select from in block 190, it is important to display the achievable end hair colors in the truest fashion, meaning, the color shown on the display screen should be substantially similar in the recipient's perception, to the color predicted by the color prediction model. There may, and likely will be, differences between the characteristics of the lighting under which a starting hair value, such as that obtained in block 160, and the characteristics of the lighting under which the achievable end colors are displayed in block 180. Further, the use of any CRT screen to display the achievable end colors will inherently cause some discrepancy between the display of the colors according to their L, a, and b values and the recipient's perceived view of them. To correct for these potential differences, block 180 may include one of more steps to adjust the color of the displayed image, and hence, its perception by the recipient (see Fig. 1).

Color adjustment

Referring to Fig. 1, block 180 of hair color analyzing method 100 may further contain one or more steps to correct for any differences between the characteristics of the lighting under which a starting hair value, such as that obtained in block 160, and the characteristics of the lighting under which the achievable end colors are displayed, (see block 180), and for the fact that use of any display screen inherently causes a difference in the recipient's perception. Applicants have found that as a result of both of these factors, i.e. lighting and use of a display screen, the recipient may find that the image displayed to them is duller or otherwise not consonant with how they would perceive their hair color, despite the fact that the L, a, b, values of the image being rendered are identical to their current hair color or achievable end hair color.

According to one method for determining the correcting factors for each shade that is suitable for use herein, one starts with any given shade. Then, a plurality of persons who have their hair colored to that shade may have their color measured (see block 160). While the image is displayed, one may adjust the L, a, b values of the displayed image until a referee who is able to discern when the color of the displayed image matches in perception, the color of the person's hair. The changes in L, a, b, respectively, may then be averaged across all persons tested. These values may then represent correcting factors.

Color Rendering Method

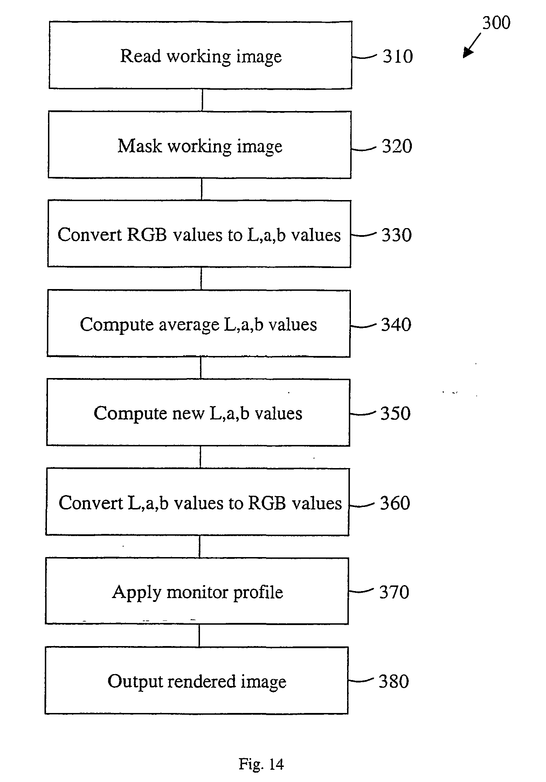

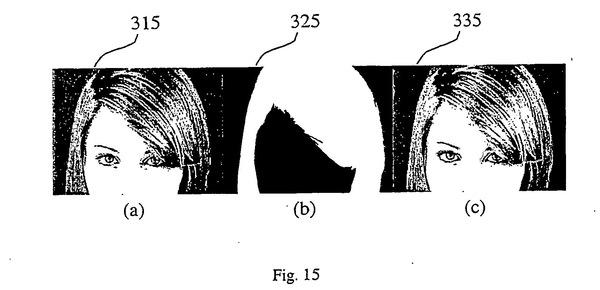

Referring to Fig. 14, color rendering method 300 contains a series of steps that are intended to convert a working image into an image that may be rendered on a display screen. Many display screens display their colors using an RGB color format. Furthermore, each type of display screen may have a unique profile. To address these issues, the technique in Fig. 14 was developed. Method 300 begins with block 310 which reads a working image 315 (see Fig. 15) into the memory of a computer or any other similar electronic device. Block 320 then masks working image 315 to create masked image 325 (see Fig. 15). Masked image 325 separates the area containing hair from the area that does not hair. This masking step is helpful in that it identifies the area that only requires changing (i.e.: area containing hair), thus reducing computer processing time. The masking may be performed automatically or manually using a variety of masking techniques that are known throughout the industry. It may also be desired to mask other area such as eyes and skin so that these areas may be changed in response to eye and skin information supplied by the recipient in block 150. While the preferred embodiment uses the same working image 315 and the same masking image 325 for each recipient, skilled in the art would readily appreciate that other techniques may be used, including but not limited to, creating a working image from a picture of the recipient and then masking said image, without departing from the scope of the present invention. Block 330 converts the masked portion of working image 315 from RGB (Red-Green-Blue) color format to XYZ tristimulus values first and then converts them further into L, a, b colors. Block 340 computes the average L, a, and b color values of the hair portion of working image 315, said averaged values are defined below as "AverageImageColor_L", "AverageImageColor_a" and "AverageImageColor_b", respectively. Block 350 then computes new L, a, b values for each point (x,y) within the hair portion of working image 315, said new values are defined below as "NewImageColor_L", "NewImageColor_a" and "NewImageColor_b", respectively and are calculated as:

$$\text{NewImageColor\_L } (x,y) = \text{CurrentImageColor\_L}(x,y) + (\text{DesiredColor\_L} - \text{AverageImageColor\_L})$$

$$\text{NewImageColor\_a } (x,y) = \text{CurrentImageColor\_a}(x,y) + (\text{DesiredColor\_a} - \text{AverageImageColor\_a})$$

$$\text{NewImageColor\_b}(x,y) = \text{CurrentImageColor\_b}(x,y) + (\text{DesiredColor\_b} - \text{AverageImageColor\_b})$$

wherein,

AverageImageColor_L, AverageImageColor_a and AverageImageColor_b are the computed averages just discussed.
NewImageColor_L(x,y), NewImageColor_a(x,y) and NewImageColor_b(x,y) are the new computed values for the point (x,y) being edited..
CurrentImageColor_L(x,y), CurrentImageColor_a(x,y) and CurrentImageColor_b(x,y) are the original color values for the point (x,y) being edited.
DesiredColor_L, DesiredColor_a and DesiredColor_b are the color values for the desired achievable color that was selected in Block 190.

Once each point (x,y) within the hair portion of working image are converted as described above, the resulting image will have an average L, a, and b of DesiredColor_ L, DesiredColor_ a and DesiredColor_ b, respectively.
This can be easily demonstrated by summing up all (x,y) points within the hair portion and dividing by the total within the hair portion as shown below for L.

$$\text{SUM[NewImageColor\_L } (x,y)] = \text{SUM[CurrentImageColor\_L}(x,y)] + \text{SUM[(DesiredColor\_L} - \text{AverageImageColor\_L})]$$

But, SUM over all the (x,y) points is equal to the Average multiplied by the total number. If the total number of points within the hair portion is N, then

$$\text{AverageNewImageColor\_L*N} = \text{AverageCurrentImageColor\_L*N} + \text{SUM(DesiredColor\_L)} - \text{SUM(AverageImageColor\_L)}$$

$$\text{AverageNewImageColor\_L*N} = \text{AverageCurrentImageColor\_L*N} + \text{DesiredColor\_L*N} - \text{AverageImageColor\_L*N}$$

Now, AverageImageColor_ L*N will cancel out leaving

$$AverageNewImageColor\_L*N = DesiredColor\_L*N$$

That is,

$$AverageNewImageColor\_L = DesiredColor\_L$$

Block 360 converts the NewImageColor L, a, b values back to RGB so that they may be displayed on the display screen which uses RGB format. They may also be converted into sRGB values. This conversion is accomplished by first converting the NewImageColor L, a, b values to XYZ tristimulus values and then converting them further into RGB colors. Block 370 then applies the particular monitor profile for the particular display screen being used so that the NewImageColor L, a, b values are displayed as they were intended to look. This procedure for applying a particular monitor profile is described in ICC Profile API Suite Version 2.0 - Professional Color Management Tools, Eastman-Kodak Company, 1997, and as such is herein incorporated by reference. Block 380 outputs rendered image 335 (see Fig. 15). The output includes, but is not limited to, display on a display screen, printing, saving on disk, or transmitting the image to another.

Example of color rendering method 300 and color adjustment

This example illustrates how to render a person's achievable color for Light Mahogany Brown shade using color rendering method 300. A color adjustment is also illustrated.

For Light Mahogany Brown shade, the color adjustment factors were determined to be +5 for L, +2 for a, and +5 for b. Accordingly, the predicted colors must be modified as follows:

$$Desired\ L = Predicted\ L + 5$$

$$Desired\ a = Predicted\ a + 5$$

$$Desired\ b = Predicted\ b + 2$$

Assume six CIE Lab color readings of the person's hair have been made and that the average CIE Lab color is (14.16, -5.06, 4.54). According to the prediction model for Light Mahogany Brown color, the achievable output color will be:

$$Predicted\ L = 7.307 + (0.5948 \times 14.16) = 15.73$$

$$Predicted\ a = 0.0104 + (0.0868 \times 14.16) + (0.580 \times -5.06) + (0.2085 \times 4.54) = -0.75$$

$$Predicted\ b = -3.3911 + (0.2831 \times 14.16) - (0.0190 \times -5.06) + (0.3187 \times 4.54) = 2.16$$

Next, the predicted values are modified according to the color adjustment values for Light Mahogany Brown, as shown:

$$\text{Desired } L = 15.73 + 5 = 20.73$$

$$\text{Desired } a = -0.75 + 5 = 4.25$$

$$\text{Desired } b = 2.16 + 2 = 4.16$$

So, the function of color rendering method 300 is to read an image and recreate a new image that will have an average L, a, b hair color value of (20.73, 4.25, 4.16).

Next, according to blocks 310 and 320, the working image is read, and then masked, wherein these images are typical to the ones shown in Fig. 15.

Next, according to block 330, the image will then be converted from Red-Green-Blue to CIE Lab color. Assume image consists of 640 x 480 (= 307200) points with each point having three values - one each for Red, Green, and Blue. At this step, for every point in the image, the Red, Green, Blue values will first be converted to three XYZ tristimulus values according to following equations:

$$r = \text{Red}/255.0$$

$$g = \text{Green}/255.0$$

$$b = \text{Blue}/255.0$$

if (r < or = 0.03928), then r = r/12.92, else r = ((r+0.055)/1.055)$^{2.4}$
if (g < or = 0.03928), then g = g/12.92, else g = ((g+0.055)/1.055)$^{2.4}$
if (b < or = 0.03928), then b = b/12.92, else b = ((b+0.055)/1.055)$^{2.4}$

$$X = (0.4124*r + 0.3576*g + 0.1805*b)$$

$$Y = (0.2126*r + 0.7152*g + 0.0722*b)$$

$$Z = (0.0193*r + 0.1192*g + 0.9505*b)$$

Then the three XYZ tristimulus values are converted to the CIE Lab values according to the equations given below.

$$\text{Xnorm} = X/0.95$$

$$\text{Ynorm} = Y/1.0$$

$$Znorm = Z/1.09$$

if (Ynorm > 0.008856),
then fY = Ynorm $^{1/3}$ and L = 116.0*fY - 16.0
else L = 903.3*Ynorm

if (Xnorm > 0.008856),
then fX = Xnorm, $^{1/3}$
else fX = 7.787*Xnorm + 16/116

if (Znorm > 0.008856),
then fZ = Znorm$^{1/3}$
else fZ = 7.787*Znorm + 16/116

$$a = 500 * (fX - fY)$$

$$b = 200 * (fY - fZ)$$

For example, for an image point with a Red, Green, Blue values of (198, 130, 111), these equations will yield CIE Lab values of (60.1, 24.1, 21.1).

Next, according to block 340, average values for L, a, and b, will be computed. At this stage, the image will have all (i.e. 640 x 480 = 307200) its points converted from Red, Green, Blue values to CIE L, a, b values. For all the points within the area containing hair, average L, a, b values are computed by routine math (i.e.: sum / # of points). For purposes of this example, it is assumed that the average L, a, b vales are (26.7, 10.1, 15.2).

Next, according to block 350, new L, a, and b values will be computed. Each point within the area of the image containing hair is changed according to the equations discussed above in block 350. Assuming average L, a, b vales of (26.7, 10.1, 15.2) and current point color values of (59.3, 30.4, 18.4), to obtain a new image with average L, a, b color values of (20.73, 4.25, 4.16) as predicted for Light Mahogany Brown, the new L, a, b color values for this specific point will be changed to:

$$New\ L = 59.3 + (20.73\text{-}26.7) = 53.33$$

$$New\ a = 30.4 + (4.25\text{-}10.1) = 24.55$$

$$New\ b = 18.4 + (4.16\text{-}15.2) = 7.36$$

Once all the points in the image within the area containing hair have been converted according to the above technique, new image (i.e.: rendered image) will have an average L, a, b color value of (20.73, 4.25, 4.16), which is the predicted (i.e.: desired) color for Light Mahogany Brown.

Next, according to block 360, the L, a, and b values will be converted to RGB values. At this stage, the new image which is in L, a, b format (e.g., CIE Lab) must be converted back into RGB (Red, Green, and Blue) format. This procedure is accomplished by first converting L, a, b values into three XYZ tristimulus, and then converting the three XYZ tristimulus values into RGB values. This procedure may be accomplished by the following technique:

$$Lplus16By25 = (L+16.0)/25.0$$

$$CubeRootOf1By100 = 0.21544$$

$$fX = a/500.0 + CubeRootOf1By100*Lplus16By25$$

$$fY = Lplus16By25$$

$$fZ = CubeRootOf1By100*Lplus16By25 - (b/200.0)$$

$$Xnorm = 0.95 *fX^{3.0}$$

$$Ynorm = 1.0 * fY^{3.0}/100.0;$$

$$Znorm = 1.09 *fZ^{3.0}$$

$$r = ( 3.2410*Xnorm - 1.5374*Ynorm - 0.4986*Znorm)$$

$$g = (-0.9692*Xnorm + 1.8760*Ynorm + 0.0416*Znorm)$$

$$b = ( 0.0556*Xnorm - 0.2040*Ynorm + 1.0570*Znorm)$$

if (r <= 0.00304), then r = 12.92 * r, else r = 1.055 * $r^{1.0/2.4}$ - 0.055
if (g <= 0.00304), then g = 12.92 * g, else g = 1.055 * $g^{1.0/2.4}$ - 0.055
if (b <= 0.00304), then b = 12.92 * b, else b = 1.055 * $b^{1.0/2.4}$ - 0.055

$$Red = 255.0*r$$

$$Green = 255.0*g$$

$$Blue = 255.0*b$$

For example, for an image point with L, a, b values of (60.89, 24.08, 21.12) these equations will yield Red, Green, Blue values of (198, 130, 111).

- END OF EXAMPLE -

The present invention may be implemented, for example, by using the Minolta CR300 Colorimeter and NCR touchscreen Kiosk 7401, comprising a computer system and touchscreen display.
The present invention may be implemented, for example, by operating a computer system to execute a sequence of machine-readable instructions. These instructions may reside in various types of signal bearing media, such hard disk drive and main memory. In this respect, another aspect of the present invention concerns a program product, comprising signal bearing media embodying a program of machine-readable instructions, executable by a digital data processor, such as a central processing unit (CPU), to perform method steps. The machine-readable instructions may comprise any one of a number of programming languages known in the art (e.g., Visual Basic, C, C++, etc.).

It should be understood that the present invention may be implemented on any type of computer system. One acceptable type of computer system comprises a main or central processing unit (CPU) which is connected to a main memory (e.g., random access memory (RAM)), a display adapter, an auxiliary storage adapter, and a network adapter. These system components may be interconnected through the use of a system bus.

The CPU may be, for example, a Pentium Processor made by Intel Corporation. However, it should be understood that the present invention is not limited to any one make of processor and the invention may be practiced using some other type of a processor such as a coprocessor or an auxiliary processor. An auxiliary storage adapter may be used to connect mass storage devices (such as a hard disk drive) to a computer system. The program need not necessarily all simultaneously reside on the computer system. Indeed, this latter scenario would likely be the case if computer system were a network computer, and therefore, be dependent upon an on-demand shipping mechanism for access to mechanisms or portions of mechanisms that resided on a server. A display adapter may be used to directly connect a display device to the computer system. A network adapter may be used to connect the computer system to other computer systems.

It is important to note that while the present invention has been described in the context of a fully functional computer system, those skilled in the art will appreciate that the mechanisms of the present invention are capable of being distributed as a program product in a variety of forms, and that the present invention applies equally regardless of the particular type of signal bearing media used to actually carry out the distribution. Examples of signal bearing media include: recordable type media, such as floppy disks, hard disk drives, and CD ROMs and transmission type media, such as digital and analog communications links and wireless.

While particular embodiments of the present invention have been illustrated and described, it will be obvious to those skilled in the art that various changes and modifications may be made without departing from the scope of the invention as defined in the claims.

**Claims**

1. A method for identifying an achievable end hair colour (100) based upon at least one starting hair value of a recipient, said method comprising the steps of:

   a) inputting at least one starting hair value of a recipient; wherein said starting hair value is the colour of the recipient's hair measured by a colorimeter or spectrophotometer (160) and
   b) identifying at least one achievable end hair colour based upon said starting hair value; wherein said identifying of an achievable end hair colour is preformed by a colour prediction algorithm, wherein said colour prediction algorithm calculates said achievable end hair colour directly from the starting hair value using a colour model generated by using a partial least squares regression technique of colorimetric measurements taken before and after coloring for a number of consumers.

2. The method of Claim 1, wherein said starting hair value further includes a value selected from the group consisting of values representing the reason the recipient is coloring their hair (120) how damaged the recipient's hair is, what the eye and skin color of recipient are (150) and combinations thereof.

3. The method of Claims 1 or 2, wherein the color of recipient's hair is indicated using values selected from the group consisting of Hunter L, a, b color values, and Commission International de l'Eclairage L, a, b color values.

4. The method of Claim 2, wherein the recipient's hair damage is indicated using values selected from the group consisting of values representing:

   a) the recipient's hair average hair length,
   b) the frequency with which the recipient colors their hair,
   c) the amount of damage determined by a method selected from the group consisting of:

      i. intuitive self-assessment by the recipient,
      ii. visual or physical assessment by the recipient or another,
      iii. assessment using a device which measures hair damage,

iv. chemical assessment of the recipient's hair, and

v. combinations thereof; and

d) combinations thereof.

5. The method of Claim 1, further comprising the step of outputting at least one working image depicting the achievable end hair color, wherein the recipient may select said working image as a desired end hair color.

6. The method of Claim 5 wherein the L, a, b color values of said achievable end hair color are adjusted to correct for differences between the actual achievable end hair color and the recipients perception of the displayed achievable end hair color.

7. The method of Claim 5 further comprising the step of recommending a hair coloring agent to achieve said desired end hair color.

8. The method of Claim 5 wherein said working image is outputted to a display screen selected from the group consisting of a computer screen, a cathode ray tube device, and a liquid crystal display device.

9. The method of Claim 1, wherein said steps are contained within a computer system or within a computer-readable medium or within a computer data signal embedded in a carrier wave.

10. A method for identifying a hair coloring agent based upon at least one starting hair value of a recipient, according to claim 1, wherein said method further comprises the steps of :-

b) inputting a family color selection; and

c) outputting at least one working image depicting an achievable end hair color based upon said starting hair value and said family color selection.

11. The method of Claim 10 further comprising the step of inputting of a selection of said achievable end hair color and recommending a hair coloring agent to achieve said selection.


**Patentansprüche**

1. Verfahren zum Identifizieren einer im Ergebnis erreichbaren Haarfarbe (100) auf der Grundlage von mindestens einem Ausgangshaarwert eines Empfängers, wobei das Verfahren die folgenden Schritte umfasst:

a) Eingabe von mindestens einem Ausgangshaarwert eines Empfängers; wobei der Ausgangshaarwert die Farbe des Haars des Empfängers ist, gemessen mit einem Kolorimeter oder Spektralphotometer (160), und

b) Identifizieren von mindestens einer im Ergebnis erreichbaren Haarfarbe auf der Grundlage des Ausgangshaarwerts; wobei das Identifizieren einer im Ergebnis erreichbaren Haarfarbe durch einen Farbvorhersagealgorithmus erfolgt, wobei der Farbvorhersagealgorithmus die im Ergebnis erreichbare Farbe mithilfe eines Farbmodells, das unter Verwendung des PLS-Regressionsverfahrens von kolorimetrischen Messungen, die vor und nach dem Färben bei einer Reihe von Verbrauchern vorgenommen wurden, erzeugt wird, direkt aus dem Ausgangshaarwert berechnet.

2. Verfahren nach Anspruch 1, wobei der Ausgangshaarwert ferner einen Wert einschließt, der ausgewählt ist aus der Gruppe, bestehend aus Werten, die den Grund dafür, dass der Empfänger sein Haar (120) färbt, wiedergeben, dem Schädigungsgrad des Haars des Empfängers, der Augen- und Hautfarbe des Empfängers (150) und Kombinationen davon.

3. Verfahren nach Anspruch 1 oder 2, wobei die Haarfarbe des Empfängers mit Werten angegeben wird, die ausgewählt sind aus der Gruppe, bestehend aus L-, a-, b-Farbwerten nach Hunter und L-, a-, b-Farbwerten der Commission International de l'Eclairage.

4. Verfahren nach Anspruch 2, wobei die Haarschädigung des Empfängers mit Werten angegeben wird, die ausgewählt sind aus der Gruppe, bestehend aus Werten, die Folgendes darstellen:

a) die durchschnittliche Haarlänge des Haars des Empfängers,
b) die Häufigkeit, mit der der Empfänger sein Haar färbt,
c) den Schädigungsumfang, bestimmt durch ein Verfahren, ausgewählt aus der Gruppe, bestehend aus:

    i. intuitiver Selbsterfassung durch den Empfänger,
    ii. visueller oder physikalischer Erfassung durch den Empfänger oder eine andere Person,
    iii. Erfassung mit einer Vorrichtung, die Haarschädigung misst,
    iv. chemischer Erfassung des Haars des Empfängers, und
    v. Kombinationen davon; und

d) Kombinationen davon.

5. Verfahren nach Anspruch 1, das ferner den Schritt des Ausgebens von mindestens einem Arbeitsbild, das die im Ergebnis erreichbare Haarfarbe abbildet, umfasst, wobei der Empfänger das Arbeitsbild als eine gewünschte im Ergebnis erreichbare Haarfarbe auswählen kann.

6. Verfahren nach Anspruch 5, wobei die L-, a-, b-Farbwerte der im Ergebnis erreichbaren Haarfarbe so eingestellt werden, dass Unterschiede zwischen der tatsächlichen im Ergebnis erreichbaren Haarfarbe und der Wahrnehmung der angezeigten im Ergebnis erreichbaren Haarfarbe durch den Empfänger korrigiert werden.

7. Verfahren nach Anspruch 5, das ferner den Schritt des Empfehlens eines Haarfärbemittels zum Erreichen der gewünschten im Ergebnis erreichbaren Haarfarbe umfasst.

8. Verfahren nach Anspruch 5, wobei das Arbeitsbild an einen Anzeigebildschirm, ausgewählt aus der Gruppe, bestehend aus einem Computerbildschirm, einer Kathodenstrahlröhrevorrichtung und einer Flüssigkristallanzeigevorrichtung, ausgegeben wird.

9. Verfahren nach Anspruch 1, wobei die Schritte innerhalb eines Computersystems oder innerhalb eines computerlesbaren Mediums oder innerhalb eines Computerdatensignals, das in einer Trägerwelle eingebettet ist, enthalten ist.

10. Verfahren nach Anspruch 1 zum Identifizieren eines Haarfärbemittels auf der Grundlage von mindestens einem Ausgangshaarwert eines Empfängers, wobei das Verfahren ferner die folgenden Schritte umfasst:

a) Eingabe einer Farbfamilienauswahl; und
b) Ausgabe von mindestens einem Arbeitsbild, das eine im Ergebnis erreichbare Haarfarbe auf der Grundlage des Ausgangshaarwerts und der Farbfamilienauswahl abbildet.

11. Verfahren nach Anspruch 10, das ferner den Schritt des Eingebens einer Auswahl der im Ergebnis erreichbaren Haarfarbe und des Empfehlens eines Haarfärbemittels zum Erreichen der Auswahl umfasst.

**Revendications**

1. Procédé pour identifier une couleur finale de cheveux pouvant être obtenue (100) basée sur au moins une valeur de cheveux de départ d'un bénéficiaire, ledit procédé comprenant les étapes consistant à :

a) entrer au moins une valeur de cheveux de départ d'un bénéficiaire où ladite valeur de cheveux de départ est la couleur des cheveux du bénéficiaire mesurée par un colorimètre ou un spectrophotomètre (160) et
b) identifier au moins une valeur de cheveux finale pouvant être obtenue basée sur ladite valeur de cheveux de départ ; où ladite identification d'une couleur de cheveux finale pouvant être obtenue est réalisée par un algorithme de prévision de couleur, où ledit algorithme de prévision de couleur calcule ladite couleur finale pouvant être obtenue directement à partir de la valeur de cheveux de départ en utilisant un modèle de couleur généré en utilisant une technique de régression des moindres carrés partiels des mesures colorimétriques prises avant et après coloration pour un certain nombre de consommateurs.

2. Procédé selon la revendication 1, dans lequel ladite valeur de cheveux de départ comprend en outre une valeur choisie dans le groupe constitué de valeurs représentant la raison pour laquelle le bénéficiaire colore ses cheveux (120), le degré d'endommagement des cheveux du bénéficiaire, la couleur des yeux et de la peau du bénéficiaire (150), et des combinaisons de celles-ci.

3. Procédé selon la revendication 1 ou 2, dans lequel la couleur des cheveux du bénéficiaire est indiquée en utilisant des valeurs choisies dans le groupe constitué de valeurs de couleur L, a, b de Hunter et de valeurs de couleur L, a, b de la Commission Internationale de l'Éclairage.

4. Procédé selon la revendication 2, dans lequel l'endommagement des cheveux du bénéficiaire est indiqué en utilisant des valeurs choisies dans le groupe constitué de valeurs représentant :

   a) la longueur moyenne des cheveux du bénéficiaire,
   b) la fréquence à laquelle le bénéficiaire colore ses cheveux,
   c) le degré d'endommagement déterminé par un procédé choisi dans le groupe constitué de :

      i. l'auto-évaluation intuitive par le bénéficiaire,
      ii. l'évaluation visuelle ou physique par le bénéficiaire ou une autre personne,
      iii. l'évaluation en utilisant un dispositif qui mesure l'endommagement des cheveux,
      iv. l'évaluation chimique des cheveux du bénéficiaire, et
      v. des combinaisons de celles-ci ; et

   d) des combinaisons de celles-ci.

5. Procédé selon la revendication 1, comprenant en outre l'étape de restitution d'au moins une image de travail représentant la couleur de cheveux finale pouvant être obtenue, où le bénéficiaire peut choisir ladite image de travail comme couleur de cheveux finale souhaitée.

6. Procédé selon la revendication 5, dans lequel les valeurs de couleur L, a, b de ladite couleur de cheveux finale pouvant être obtenue sont ajustées pour corriger les différences entre la couleur de cheveux finale pouvant être obtenue réelle et la perception par le bénéficiaire de la couleur de cheveux finale pouvant être obtenue affichée.

7. Procédé selon la revendication 5, comprenant en outre l'étape de conseil d'un agent de coloration capillaire pour obtenir ladite couleur de cheveux finale souhaitée.

8. Procédé selon la revendication 5, dans lequel ladite image de travail est restituée sur un écran d'affichage choisi dans le groupe constitué d'un écran d'ordinateur, d'un dispositif à tube cathodique et d'un dispositif d'affichage à cristaux liquides.

9. Procédé selon la revendication 1, dans lequel lesdites étapes sont contenues dans un système informatique ou sur un support pouvant être lu par un ordinateur ou dans un signal de données informatiques intégré dans une onde porteuse.

10. Procédé pour identifier un agent de coloration capillaire sur base d'au moins une valeur de cheveux de départ d'un bénéficiaire, selon la revendication 1, où ledit procédé comprend en outre les étapes consistant à :

   a) entrer un choix d'une famille de couleurs ; et
   b) restituer au moins une image de travail représentant une couleur de cheveux finale pouvant être obtenue sur base de ladite valeur de cheveux de départ et dudit choix de la famille de couleurs.

11. Procédé selon la revendication 10, comprenant en outre l'étape d'entrée d'un choix de ladite couleur de cheveux finale pouvant être obtenue et de conseil d'un agent de coloration capillaire pour obtenir ledit choix.

```
┌─────────────────────────────┐
│       Welcome screen        │──── 110              ↙ 100
└─────────────────────────────┘
              │
┌─────────────────────────────┐
│        Why coloring?        │──── 120
└─────────────────────────────┘
              │
┌─────────────────────────────┐
│    Frequency of coloring?   │──── 130
└─────────────────────────────┘
              │
┌─────────────────────────────┐
│     Average length of hair? │──── 140
└─────────────────────────────┘
              │
┌─────────────────────────────┐
│         Eye color?          │──── 150
│       (also skin color)     │
└─────────────────────────────┘
              │
┌─────────────────────────────┐
│        Take readings        │──── 160
└─────────────────────────────┘
              │
┌─────────────────────────────┐
│        Family color?        │──── 170
└─────────────────────────────┘
              │
┌─────────────────────────────┐
│  Display achievable end colors │──── 180
└─────────────────────────────┘
              │
┌─────────────────────────────┐
│       Desired end color?    │──── 190
└─────────────────────────────┘
              │
┌─────────────────────────────┐
│    Product recommendation   │──── 200
└─────────────────────────────┘
```

Fig. 1

The Colour Selection System
will predict the colour of your hair
using the VS Sassoon Colourants

Fig. 2

Why are you colouring your hair?

| to cover grey | to lighten hair |
| to darken hair | to enhance hair |

Fig. 3

How often have you coloured your hair over the past year?
(including bleaching, highlights, lowlights)

| Once or more per month | Every 4-8 weeks |
| Every 2-3 Months | Every 3-6 months |
| Once | Not coloured |

Fig. 4

Touch on the hair-length most appropriate to you

| Close cut | Ear length |
| Between shoulder and ear length | Shoulder length |
| Between shoulder and mid-back | Mid-way down your back |

Waist-length

Fig. 5

Select the eye-colour most appropriate to you

| Blue | Brown |
| Green | Hazel |

Fig. 6

| Take Reading 1 | Take Reading 4 |
| Take Reading 2 | Take Reading 5 |
| Take Reading 3 | Take Reading 6 |

Fig. 7

What type of colour do you want to achieve?
(choose up to two)

| Blonde | Light Brown |
| Medium Brown | Dark Brown |
| Red / Copper | |

Fig. 8

Light Mahogany Brown     Light Auburn Brown

Light Brown     Lightest Brown

Light Chestnut Brown     Lightest Golden Brown

Fig. 9

| Family of Colors | | | | | | |
|---|---|---|---|---|---|---|
| Red /<br>Copper | Light<br>Brown | Med<br>Brown | Dark<br>Brown | Blonde | Shades | change or<br>enhance? |
| x | | | | | Auburn | e |
| x | x | | | | Light Mahogany Brown | e |
| | x | | | | Light Brown | e |
| x | x | | | | Light Chestnut Brown | e |
| | | | x | | Dark Brown | e |
| x | | x | | | Mid Copper Brown | e |
| | | | | x | Light Pearl Ash Blonde | c |
| | | | | x | Mist Beige Blonde | c |
| x | | | | | Rich Burgundy Red | c |
| x | x | | | | Light Auburn Brown | c |
| | x | | | | Lightest Brown | c |
| | x | | | | Lightest Golden Brown | c |
| | | x | | | Soft Medium Brown | c |
| x | | | | | True Red | c |
| | | | x | | Warm Dark Brown | c |
| x | | | | x | Soft Copper Blonde | c |

Fig. 10

PRIOR ART – COLOR CHART ON EXISTING PACKAGING

Fig. 11

20

enhances
for colour enhancement

65

Here is the shade you need to achieve your chosen colour:

Shade No.: 65
Shade Name: Light Mahogany Brown

Fig. 12

| person | Position on head | Before coloring | | | After coloring | | |
|---|---|---|---|---|---|---|---|
| | | L | A | b | L | a | b |
| 1 | front | 23.21 | 2.26 | 3.39 | 22.85 | 3.95 | 3.75 |
| 1 | front left | 22.61 | 2.58 | 4.00 | 20.74 | 4.25 | 4.28 |
| 1 | back left | 22.08 | 2.54 | 3.44 | 20.85 | 3.71 | 3.74 |
| 1 | back | 23.73 | 2.86 | 4.34 | 22.84 | 2.95 | 4.45 |
| 1 | back right | 21.62 | 2.62 | 3.71 | 20.65 | 3.92 | 3.23 |
| 1 | front right | 22.15 | 2.50 | 3.91 | 19.6 | 4.62 | 3.65 |
| 1 | average | 22.57 | 2.56 | 3.80 | 21.26 | 3.90 | 3.85 |

Fig. 13

300

```
┌─────────────────────────────────┐
│      Read working image         │── 310
└─────────────────────────────────┘
                │
┌─────────────────────────────────┐
│      Mask working image         │── 320
└─────────────────────────────────┘
                │
┌─────────────────────────────────┐
│  Convert RGB values to L,a,b values │── 330
└─────────────────────────────────┘
                │
┌─────────────────────────────────┐
│   Compute average L,a,b values  │── 340
└─────────────────────────────────┘
                │
┌─────────────────────────────────┐
│     Compute new L,a,b values    │── 350
└─────────────────────────────────┘
                │
┌─────────────────────────────────┐
│  Convert L,a,b values to RGB values │── 360
└─────────────────────────────────┘
                │
┌─────────────────────────────────┐
│      Apply monitor profile      │── 370
└─────────────────────────────────┘
                │
┌─────────────────────────────────┐
│      Output rendered image      │── 380
└─────────────────────────────────┘
```

Fig. 14

315     325     335

(a)     (b)     (c)

Fig. 15

Welcome screen — 110

100

Why coloring? — 120

Frequency of coloring? — 130

Average length of hair? — 140

Eye color?
(also skin color) — 150

Take readings — 160

Amount of hair damage? — 210

Family color? — 170

Display achievable end colors — 180

Desired end color? — 190

Product Recommendation — 200

Fig. 16

How damaged is your hair?

| | |
|---|---|
| 1. Slightly | 2. Substantially |
| 2. Moderately | 4. Heavily |

| | |
|---|---|
| Previous | Start Over |

Fig 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 09570292 B
- WO 9641139 A
- WO 0015073 A
- EP 290327 A
- DE 19816631
- EP 965834 A
- JP 63163143 A
- JP 62273433 A